# EUROPEAN PATENT APPLICATION

(11) **EP 3 336 955 A1**
(43) Date of publication of application: **20.06.2018**
(21) Application number: 16203951.5
(22) Date of filing: 14.12.2016
(51) Int. Cl.: H01M 10/44

(54) **BATTERY ELEMENT AND BATTERY COMPRISING SUCH BATTERY ELEMENTS**

(71) Applicant: Lithium Energy and Power GmbH & Co. KG, 70469 Stuttgart (DE)
(72) Inventor: Deromelaere, Gaetan, 70806 Kornwestheim (DE); Wille, Christopher, 70563 Stuttgart (DE); Klinsmann, Markus, 70195 Stuttgart (DE)
(74) Representative: Bee, Joachim

(57) **Abstract**

The invention regards a battery element (1) comprising a plurality of battery cells (2) electrically connected in parallel and/or serial, and at least one fast discharging device (3), wherein at least two battery cells (2) are electrically connected to one common fast discharging device (3), and wherein each battery cell (2) is directly electrically connected to the fast discharging device (3).

## Description

### Prior art

The invention regards a battery element. Further, the invention regards a battery comprising such battery elements. According to the definition of the invention, a battery comprises a plurality of battery elements, which are electrically connected in parallel and/or serial. Each battery element comprises a plurality of battery cells, particularly primary cells, which are electrically connected in parallel and/or serial. A battery element is also called battery module, wherein several battery modules are connected to form a battery pack.

From the prior art it is known that batteries, particularly Li-ion batteries, comprise volatile and combustible electrolytes. In case of internal shorts or mechanical damage, for example caused by nail penetration, a battery cell might overheat. This could lead to so-called thermal runaway, i.e. an exothermic reaction which cannot be stopped.

In order to provide thermal runaway, a discharging device is provided. The discharging device is adapted to shortcut a single battery cell in case the battery cell is damaged. Therefore, the battery cell is discharged in a quick way. In the invention, discharging either means removing the energy from the battery cell or reaching the shutdown temperature of the separator of the battery cell. In both cases, battery cell can not supply power any more. To ensure such a quick discharge, high currents have to flow through the discharging device. Therefore, the discharging device has to be placed close to the battery cell in order to shorten the electric path the current has to flow.

In case of batteries including a lot of battery elements, wherein the battery elements include a lot of battery cell, which particularly is the case in electric vehicles, the discharging devices require a lot of volume such that the overall volume of the battery is increased.

### Disclosure of the invention

The inventive battery element connects more than one battery cells to one discharging device. Therefore, the number of discharging devices can be reduced which also reduces the volume of the battery and can simplify the electrical connection.

The battery element according to the invention comprises a plurality of battery cells electrically connected in parallel and/or serial, and at least one fast discharging device. As explained above, a battery is defined to comprise at least one battery element, which is a combination of several battery cells. At least two battery cells are electrically connected to one common fast discharging device. This particular means that all terminals of at least two battery cells are electrically connected to one single discharging device. Each battery cells particularly comprises two terminals. This means, the battery element is adapted to guide an electrical current from each battery cell to the discharging device and back to the battery cell. Each battery cell is directly electrically connected to the fast discharging device. Therefore, one discharging device discharges several battery cells, wherein each battery cell is connected to the discharging device as it would only discharge the single battery cell.

The dependent claims contain advantageous embodiments of the invention.

Preferably, a current path for discharging any battery cell is free of serial or parallel connection of other battery cells. Therefore, a current path can be identified which includes only a specific battery cell and the discharging device. The discharging device is therefore connected to several battery cells but discharges every battery cell in the same way as it would be discharged in case the discharging device would only discharge said battery cell.

The battery cells preferably are electrically connected in serial via cell connection points. Each fast discharging device is electrically connected to the cell connection points. Therefore, each battery cell is directly connected to the discharging device with no other electrical components within the current path between the discharging device and the battery cell.

Further preferred, each fast discharging device is electrically connected to at least one further fast discharging device. In this way, several battery cells can be discharged with a less amount of discharging devices. Particularly, the number of discharging devices can be half of the number of battery cells, wherein still each battery cell comprises an own current path to one of the discharging devices.

The battery cells particularly are electrically connected via first busbars. In this case, the fast discharging device is electrically connected to the first busbars. Preferably, the battery cells are electrically connected to the fast discharging device via second busbars. Busbars can carry a high current which allows shortcutting the battery cells without overheating or damaging the discharging device and/or the battery cell.

In a further preferred embodiment, two battery cells are electrically connected to one fast discharging device such that the number of fast discharging devices of the battery element is half of the number of battery cells of the battery element. Therefore, the number discharging devices is reduced significantly. This leads to significant volume reduction of the battery element.

In another preferred embodiment, three battery cells are electrically connected to one fast discharging device such that the number of fast discharging devices of the battery element is one third of the number of battery cells of the battery element. The further reduction of discharging device further reduces the volume of the battery element. The reduced volume preferably allows application of the battery elements in electrical driven vehicles.

The fast discharging device preferably is adapted to selectively shortcut the connected battery cells. Said shortcut preferably is irreversible. After being shortcut, the battery cell is discharged. This is particularly preferred in case the battery cell is damaged. Since in this case, internal shortcuts might occur which lead to heat being generated inside the battery cell, the battery cell might catch fire or might explode. Both scenarios have to be avoided. Therefore, the discharging device establishes an external shortcut with a lower resistance than the internal shortcut such that the current flows through the external shortcut, where heat can be dissipated.

The invention further regards a battery comprising a plurality of battery elements as described above. The battery therefore is reduces in volume while providing the same safety features as conventional batteries. Particularly, it is still possible to discharge every battery cell via a discharging device.

### Description of the drawings

Specific embodiments of the invention are described with reference to the attached drawings. In the drawings
- Figure 1: is a schematic view of a battery element according to a first embodiment of the invention,
- Figure 2: is a schematic view of a battery element according to a second embodiment of the invention,
- Figure 3: is a schematic view of a battery element according to a third embodiment of the invention,
- Figure 4: is a schematic view of a battery element according to a fourth embodiment of the invention, and
- Figure 5: is a schematic view of a battery according to an embodiment of the invention.

### Embodiments of the invention

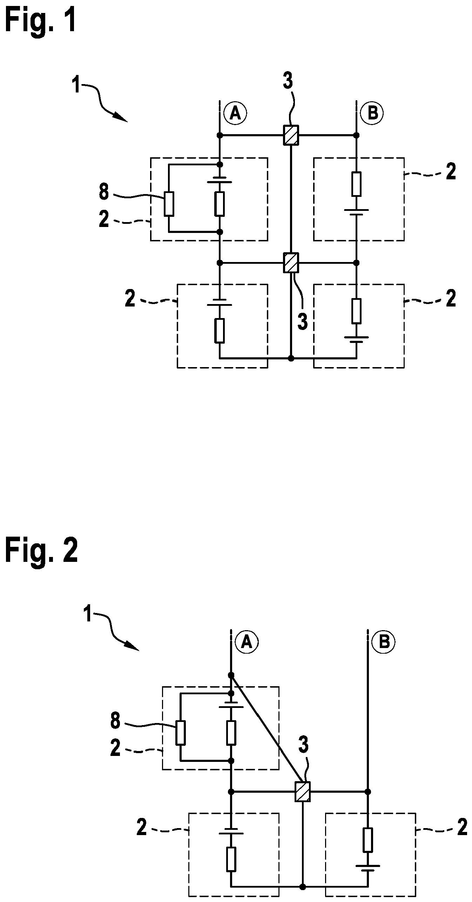

Figure 1 is a schematic view of a battery element 1 according to a first embodiment of the invention. The battery element 1 comprises four battery cells 2 and two discharging devices 3.

As can be seen from figure 1, the battery element 1 comprises battery cells 2 being connected in series from point A to point B. Each battery cell 2 is directly connected to one of the discharging devices. Therefore, each battery cell 2 is part of a single current path connecting the respective battery cell 2 and one of the discharging devices 3. In case on of the battery cells 2 is damaged, an internal shortcut occurs. This is shown in figure 1 by the resistance 8. In order to avoid heat being generated via the resistance 8, the discharging devices are activated. The discharging devices therefore externally shortcut each battery cell 2 such that in the damaged battery cell 2 most of the current flows through the discharging device 3 and only a minor part through the resistance 8. This leads to reduced heat generated by the resistance 8 such that the battery cells 2 are prevented from overheating.

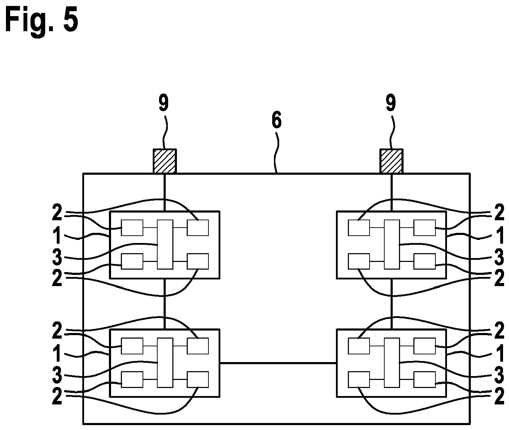

Further, at least two battery cells 2 are connected to one discharging device 3. Therefore, the total number of discharging devices is reduced. This leads to an reduced volume of batteries 6 (cf. figure 5) comprising the battery element 1.

The discharging devices 3 all have to be activated simultaneously .The discharging devices 3 then discharge all battery cells 2. During discharge, no reverse polarity occurs. This is a phenomenon known from the case in which a number of battery cells 2 is shortcut via one single discharging device 3. If an interruption occurs in the current path generated via the discharging device 3, which might be due to separator shutdown or current collector melting or other processes, the potential of the electrodes can be shifted such that at some of the battery cells 2, a reversed voltage is obtained. This can lead to a hazardous behavior of the cells. Particularly, if the potential of Cu is shifted above that of Al, Cu²⁺ dissolution can take place leading to growth of Cu dendrites. Those dendrites might cause further internal shortcuts.

Further, shutdown of single battery cells 2 does not interrupt the discharge path of the damaged battery cell 2. In the prior art, in case more than one battery cell 2 is connected to the discharging device 3, shutdown of any of the battery cells 2 interrupts the current path. Therefore, the condition is the same as when no external shortcut would be present at all. The damaged battery cell 2 is therefore again discharged via the resistance 8, i.e. the damaged zone. Such a shutdown of the damaged battery cell 2 disables the electrochemical functionality of the damaged battery cell 2. However, the damaged battery cell 2 still comprises the internal shortcut such that a current path is established via resistance 8. In case other battery cells 2 still have to be discharged, the discharging current flows via the resistance 8 and therefore generates heat inside the damaged battery cell 2.

This is also avoided in the battery element 1 according to the first embodiment since the current paths established by the discharging devices 3 have an electrical resistance lower than that of resistance 8.

The battery cells 2 and the discharging devices 3 are preferably connected via busbars. Said busbars particularly are made of copper and/or aluminum and have a low electrical resistance to allow high currents.

The scheme shown in figure 1 might be continued, such that for example twelve battery cells 2 require six discharging devices 3.

Figure 2 is a schematic view of a battery element 1 according to a second embodiment of the invention. Again, the battery element 1 comprises battery cells 2 being connected in serial from point A to point B. The battery element 1 comprises three battery cells 2 and one discharging device 3, The discharging device 3 is directly connected to any of the battery cells 2. As in the first embodiment, every battery cells 2 therefore has an own current path connecting the respective battery cells 2 and the discharging device 3.

The second embodiment therefore only requires one discharging device for three battery cells 2. The volume of a battery 6 comprising such battery elements 1 is therefore further reduced.

With the second embodiment, the same advantages as in the first embodiment can be achieved.

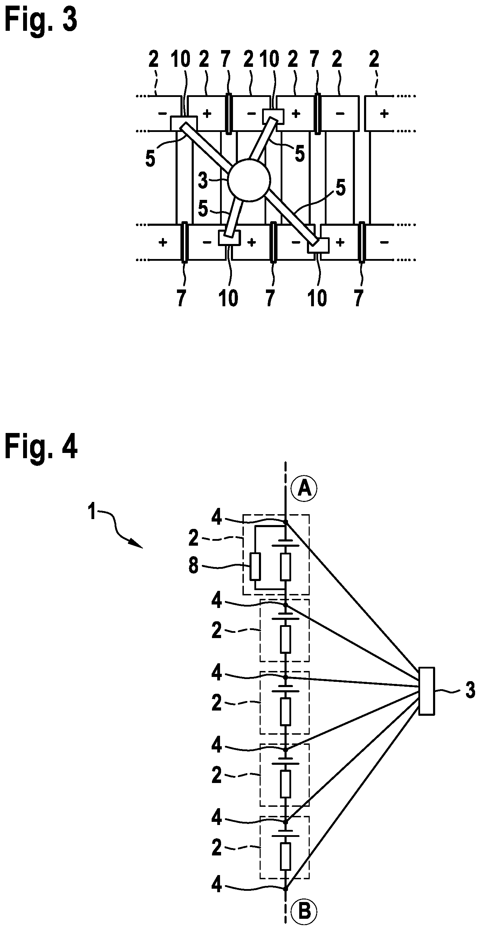

Figure 3 is a schematic view of a battery element 1 according to a third embodiment of the invention. In the third embodiment, the battery element 1 comprises several battery cells 2 according to the PHEV2-cell concept. The PHEV2-cells comprise conductive bodies such that a serial connection can be achieved by alternately including isolating elements 7 between parts of the conductive bodies of the battery cells 2. The other parts are connected via first busbars 10. The discharging device 3 is connected to at lest two battery cells 2 via second busbars 5 connected to the first busbars 10. In this way, the discharging device 3 can simply be included into existing battery elements 1 comprising MAR-cells. The number of first busbars 10 to which the discharging device 3 can be connected to is not limited. However, the length of the second busbars 5 shall be short in order to establish a low resistance current path. Therefore, preferably more than one discharging device 3 is employed to connect all the battery cells 2 to one of the discharging devices 3. This ensures that each battery cell 2 is directly connected to one of the discharging devices 3 without further electrical components.

Therefore, the third embodiment particularly shows the same connection concept as in the first and second embodiment such that the same advantages can be achieved.

Figure 4 is a schematic view of a battery element 1 according to a fourth embodiment of the invention. In this embodiment, the battery element 1 comprises several battery cells 2 connected in series from point A to point B. The battery cells 2 are electrically connected to each other vie cell connection points 4. Further, each cell connection point 4 is electrically be connected to one discharging device 3.

In figure 4, one discharging device 3 is shown. However, there can be provided more than one discharging devices 3, each being connected to parts of the cell connection points 4.

Again, at least two battery cells 2 are connected to one discharging device 3 while at the same time each battery cell 2 is directly connected the discharging device 3 or one of the discharging devices 3. The fourth embodiment therefore particularly shows the same effects as in the first, second, and third embodiment. In particular, there is a dedicated current path for each battery cells. Hence, the same advantages as in the first, second, and third embodiment can be achieved.

Finally, figure 5 is a schematic view of a battery 6 according to an embodiment of the invention. The battery 6 preferably comprises at least one battery element 1 according to any of the above mentioned embodiments. Therefore, the battery 6 is low in volume on the one hand and allows discharging damaged battery cells 2 in a safe and reliable manner on the other hand.

## Claims

1. Battery element (1) comprising
• a plurality of battery cells (2) electrically connected in parallel and/or serial, and
• at least one fast discharging device (3),
• wherein at least two battery cells (2) are electrically connected to one common fast discharging device (3), and
• wherein each battery cell (2) is directly electrically connected to the fast discharging device (3).

2. Battery element (1) according to claim 1, **characterized in that** a current path comprising one battery cell (2) and one discharging device (3) for discharging the battery cell (2) is free of serial or parallel connection of other battery cells (2).

3. Battery element (1) according to any of the previous claims, **characterized in that** the battery cells (2) are electrically connected in series via cell connection points (4), wherein each fast discharging device (3) is electrically connected to the cell connection points (4).

4. Battery element (1) according to claim 3, **characterized in that** each fast discharging device (3) is electrically connected to at least one further fast discharging device (3).

5. Battery element (1) according to any of the previous claims, **characterized in that** the battery cells (2) are electrically connected via first busbars (10), wherein the fast discharging device (3) is electrically connected to the first busbars (10).

6. Battery element (1) according to any of the previous claims, **characterized in that** the battery cells (2) are electrically connected to the fast discharging device (3) via second busbars (5).

7. Battery element (1) according to any of the previous claims, **characterized in that** two battery cells (2) are electrically connected to one fast discharging device (3) such that the number of fast discharging devices of the battery element (1) is half of the number of battery cells (2) of the battery element (1).

8. Battery element (1) according to any of claims 1 to 6, **characterized in that** three battery cells (2) are electrically connected to one fast discharging device (3) such that the number of fast discharging devices of the battery element (1) is one third of the number of battery cells (2) of the battery element (1).

9. Battery element (1) according to any of the previous claims, **characterized in that** the fast discharging device (3) is adapted to selectively shortcut the connected battery cells (2).

10. Battery (6) comprising a plurality of battery elements (1) according to any of the previous claims.
